# EUROPÄISCHE PATENTSCHRIFT

(11) **EP 2 042 031 B1**
(45) Veröffentlichungstag und Bekanntmachung des Hinweises auf die Patenterteilung: **31.03.2010**
(21) Anmeldenummer: 07019138.2
(22) Anmeldetag: 28.09.2007
(51) Int. Cl.: A01G 9/14

(54) **Gewächshaussystem**
Greenhouse system
Système de serre

(43) Veröffentlichungstag der Anmeldung: 01.04.2009
(73) Patentinhaber: Scheuten S.à.r.l., 5916 PA Venlo (NL)
(72) Erfinder: Giesen, Leon, 5708 CL Helmond (NL); Rutten, Gied, 5973 KG Lottum (NL); Geyer, Volker, 41372 Niederkrüchten (DE); Villari, Valentino, Dr., 41063 Mönchengladbach (DE)
(74) Vertreter: Jostarndt, Hans-Dieter

(56) Entgegenhaltungen:
- EP-A- 0 747 330
- EP-A- 0 759 566
- EP-A- 1 652 422
- EP-A- 1 889 818
- WO-A-2004/077935
- DE-A1- 3 314 922
- GB-A- 2 165 547
- US-A1- 2003 113 551
- ANONYMOUS: "Gigahertz Optik Catalog /TUTORIALS: Chapter VI.2 - Plant physiology" 18. Februar 2005 (2005-02-18), GIGAHERTZ OPTIK , XP002471970 Gefunden im Internet: URL:http://www.gigahertz-optik.com/databas e_en/html/applications-tutorials/tutorials /vi.-applications-for-light-measurement-in -medicine-technology-industry-and-environm ental-science/vi.2.-plant-physiology.html> * das ganze Dokument *

## Beschreibung

Die vorliegende Erfindung betrifft ein Gewächshaussystem, welches mindestens eine Pflanzenkultur umfasst, wobei mindestens ein Teil der Verglasung des Gewächshaussystems mindestens eine an diese Pflanzenkultur angepasste Funktionsschicht umfasst.

Es ist bekannt, Pflanzenkulturen in Gewächshäusern zu züchten. Zur Verglasung dieser Gewächshäuser kann dabei zum Beispiel Glas, insbesondere Silikatglas oder Nörpelglas, verwendet werden.

Nörpelglas wird meist bevorzugt verwendet, da es aufgrund seiner Struktur die Pflanzen vor Verbrennungen durch direkte Sonneneinstrahlung schützt und diffuses Licht für die Pflanzenkultur zur Verfügung stellt.

Die Isolierung derart verglaster Gewächshäuser lässt jedoch meistens zu wünschen übrig. Dadurch ist im Sommer viel Energie nötig, um diese Gewächshäuser zu kühlen und im Winter wiederum viel Energie nötig, um diese Gewächshäuser zu heizen.

Die Verwendung von Isolierglas zur Verglasung von Gewächshäusern ist nicht sehr verbreitet, da bei Isolierglas die Lichttransmission im Vergleich zu einfachem Glas ungefähr 10% geringer ist. Dadurch wird ein geringerer Ertrag erwartet.

Dabei spielt die Transmission des Gewächshauses beziehungsweise der verwendeten Verglasung im gesamten Wellenlängenbereich eine wichtige Rolle, da 1 % mehr Transmission meist 1 % mehr Ertrag bei der Pflanzenkultur bedeutet.

Jedoch wird bei der Verglasung von Gewächshäusern in letzter Zeit auch vermehrt auf glasartige Polymermaterialien zurückgegriffen.

Diese weisen die Vorteile auf, dass sie im Vergleich zu Glas leicht, bruchsicher und meist als Sandwichpaneele, Hohlkammerplatten beziehungsweise als sogenannte Stegdoppel- oder sogar als Stegdreifachplatten zur Verfügung gestellt werden.

Jedoch haben auch diese Materialien große Nachteile, da sie unter Umständen für UV-Licht transparent sein können, und somit zu Verbrennungen an den Pflanzenkulturen bei starker Lichteinstrahlung beitragen können. Zudem sind diese Materialien nicht sehr UV-stabil und altem daher unter dauernder Lichteinstrahlung. Darüber hinaus ist die Isolierung bei Sandwichpaneelen, Hohlkammerplatten beziehungsweise so genannten Stegdoppel- oder sogar als Stegdreifachplatten im Vergleich zu Isolierglas ineffizient.

Durch diese Vor- und Nachteile der verschiedenen zur Verglasung verwendeten Materialien kann es daher schwierig werden, die optimalen und jeweils an die gezüchteten Pflanzen angepassten Bedingungen für eine bestimmte Pflanzenkultur zu Verfügung zu stellen.

Darüber hinaus offenbart die Druckschrift EP 0759566 ein Kompositmaterial aus einem Träger zum Beispiel aus Mineralglas oder Polycarbonat mit einem Interferenzschichtsystem aus mindestens zwei Metalloxid-, Metallflurid- oder Metallsutfidschichten mit unterschiedlicher Brechzahl, welches dazu verwendet wird, die Transmission für eine Verwendung in nord- und mitteleuropäischen Ländern sowie in Bezug auf allgemein für Pflanzen ermittelte Werte zu optimieren.

Aufgabe der vorliegenden Erfindung ist es, ein Gewächshaussystem zur Verfügung zu stellen, welches optimale Bedingungen für die jeweilige Pflanzenkultur sicherstellt.

Die Aufgabe wird durch ein Gewächshaussystem mit den Merkmalen des Anspruchs 1 gelöst.

Vorteilhafte Weiterbildungen und Ausführungsformen ergeben sich aus der folgenden Beschreibung sowie den Unteransprüchen.

Die vorliegende Erfindung betrifft ein Gewächshaussystem, welches mindestens eine Pflanzenkultur umfasst, wobei mindestens ein Teil der Verglasung des Gewächshaussystems mindestens eine an diese Pflanzenkultur angepasste Funktionsschicht umfasst.

Im Sinne der vorliegenden Erfindung umfasst der Begriff Gewächshaussystem alle Arten von lichtdurchlässigen Konstruktionen, wie zum Beispiel Gewächshäusern, Glashäusern, Treibhäusern, Folientunneln oder Kombinationen davon, die das geschützte Kultivieren von Pflanzen ermöglichen, welche bevorzugterweise mindestens eine Pflanzenkultur umfassen. Dabei kann das Gewächshaussystem mindestens eine, aber auch eine Vielzahl verschiedener lichtdurchlässiger Konstruktionen umfassen, die in irgendeiner Weise zum Beispiel durch Durchgänge, Gänge, Tunnel, Türen, Tore, Schleusen miteinander verbunden sind. Die einzelnen lichtdurchlässigen Konstruktionen, die das geschützte Kultivieren von Pflanzen ermöglichen, können dabei zum Beispiel in Einzelbauweise (mit jeweils vier freiliegenden Wänden), in Serienbauweise (mit mindestens einer gemeinsamen Trennwand zwischen zwei benachbarten Konstruktionen) oder in Blockbauweise (als zusammenhängende Blöcke mit Außenwänden, aber ohne Trennwände zwischen benachbarten Konstruktionen) ausgeführt werden.

Verglasung beziehungsweise Glas beziehungsweise Glasscheibe oder Glasplatte im Sinne der vorliegenden Erfindung umfasst dabei nicht nur alle Arten von Glas, sondern auch im sichtbaren Wellenlängenbereich transparente und/oder glasartige beziehungsweise amorphe Polymermaterialien, wie zum Beispiel Polycarbonat, Polymethylmethacrylat, Polyethylen, PVC, Polystyrol. Transparent kann dabei bedeuten, dass die Transmission im sichtbaren Wellenlängenbereich höher als 25 %, bevorzugt 50 % ist.

Eine Pflanzenkultur im Sinne der Erfindung umfasst mindestens eine Pflanze, bevorzugt aber zwei oder mehrere bevorzugterweise benachbarte Pflanzen, welche kultiviert werden. Dabei kann eine Pflanzenkultur auch mehrere unterschiedliche oder besonders bevorzugt gleiche Pflanzen umfassen.

Darüber hinaus kann das Gewächshaussystem auch mehrere gleiche oder besonders bevorzugt unterschiedliche Pflanzenkulturen umfassen.

Ein Teil der Verglasung des Gewächshaussystems im Sinne der vorliegenden Erfindung bedeutet mindestens einen Abschnitt der Verglasung des Gewächssystems, also zum Beispiel mindestens eine zur Verglasung verwendete Glasplatte. Dabei beziehen sich die Begriffe wie "ein Teil der Verglasung" im Sinne der vorliegenden Erfindung besonders bevorzugt auf die Dachverglasung des Gewächshaussystems oder auf einen Teil davon.

Ein Teil der Verglasung des Gewächshaussystems im Sinne der vorliegenden Erfindung kann dabei bevorzugt mindestens 5 %, bevorzugt mindestens 10 %, weiter bevorzugt mindestens 15 %, weiter bevorzugt mindestens 20 %, weiter bevorzugt mindestens 25%, weiter bevorzugt mindestens 30 %, weiter bevorzugt mindestens 35 %, weiter bevorzugt mindestens 40 %, weiter bevorzugt mindestens 45 %, besonders bevorzugt mindestens 50 % der Verglasung und insbesondere der Dachverglasung des Gewächshaussystems ausmachen.

Ein Teil der Verglasung des Gewächshaussystems im Sinne der vorliegenden Erfindung kann dabei bis zu 55 %, bevorzugt bis zu 60 %, weiter bevorzugt bis zu 65 %, weiter bevorzugt bis zu 70 %, weiter bevorzugt bis zu 75%, weiter bevorzugt bis zu 80 %, weiter bevorzugt bis zu 85 %, weiter bevorzugt bis zu 90 %, weiter bevorzugt bis zu 95 %, besonders bevorzugt bis zu 100 % der Verglasung und insbesondere der Dachverglasung des Gewächshaussystems ausmachen.

Angepasst an eine Pflanzenkultur im Sinne der vorliegenden Erfindung kann dabei bedeuten, dass mindestens eine Eigenschaft eines Teils der Verglasung des Gewächshaussystems dank mindestens einer Funktionsschicht an das jeweilige Optimum für diese Pflanzenkultur angenähert wird. Dabei kann insbesondere zum Beispiel der Anteil an diffusem Durchlicht beziehungsweise diffusem transmittiertem Licht und/oder die Transmission der Verglasung in mindestens einem bestimmten Wellenlängenbereich dank mindestens einer Funktionsschicht an das jeweilige Optimum für diese Pflanzenkultur angenähert werden. Das Optimum für eine bestimmte Pflanzenkultur kann dabei mit dem Optimum für die Pflanze dieser Kultur übereinstimmen. Sollte die Pflanzenkultur verschiedene Pflanzen umfassen, so kann das Optimum für die Pflanzenkultur auch den Mittelwert der Optima für die verschiedenen Pflanzen, gegebenenfalls unter Berücksichtigung ihres Anteils an der Pflanzenkultur, entsprechen.

Das Optimum bezüglich des Anteils an diffusem Durchlicht beziehungsweise an diffusem transmittiertem Licht hängt dabei von der jeweiligen Pflanzenkultur beziehungsweise von den jeweiligen Pflanzen ab. Der Anteil an diffusem Durchlicht beziehungsweise an diffusem transmittiertem Licht beziehungsweise an transmittiertem Streulicht im Sinne der vorliegenden Erfindung kann dabei der Anteil an Einstrahlungslicht, insbesondere Sonneneinstrahlungslicht, sein, welcher, nachdem er die Verglasung durchquert hat (also transmittiert wurde), als Streulicht beziehungsweise diffuses Licht, bei dem die einzelnen Lichtstrahlen im Wesentlichen nicht (mehr) parallel zueinander ausgerichtet sind, in den Innenraum des Gewächshaussystems gelangt. Dabei kann die gegebenenfalls ursprüngliche parallele Ausrichtung durch Streuung, insbesondere durch Volumenstreuung zum Beispiel durch Reflexionen, durch Refraktionsphänomene oder durch Interferenzphänomene gestört werden.

Die optimale Transmission in bestimmten Wellenlängenbereichen hängt dabei von der jeweiligen Pflanzenkultur beziehungsweise von den jeweiligen Pflanzen ab. Allgemein kann man jedoch sagen, dass eine hohe Transmission für das Pflanzenwachstum förderlich ist.

Jedoch gibt es für jede Pflanze einen ziemlich individuellen sogenannten PAR (Photosynthetic Active Radiation)-Bereich des elektromagnetischen Spektrums. Der PAR-Bereich ist der Wellenlängenbereich, der zum Wachstum der jeweiligen Pflanzenkultur beziehungsweise von der jeweiligen Pflanze beitragen kann, da er für die Fotosynthese verwendet werden kann.

Der PAR-Bereich umfasst dabei zumeist zum Beispiel einen Wellenlängenbereich von 300 nm bis 800 nm bevorzugt von 400 nm bis 700 nm. Innerhalb dieses Bereiches tragen bestimmte Wellenlängen nochmals in besonders effizienter Weise zur Fotosynthese und damit zum Pflanzenwachstum bei. Das gelb/orange Licht im Wellenlängenbereich zwischen ungefähr 550 nm und 600 nm insbesondere zwischen 600 nm und 650 nm ist dabei besonders effizient. Auch rotes Licht im Wellenlängenbereich zwischen ungefähr 650 nm und 700 nm ist sehr effizient. Blau/grünes Licht im Wellenlängenbereich zwischen ungefähr 400 nm und 475 nm ist ebenfalls effizient. Grün/gelbes Licht im Wellenlängenbereich zwischen ungefähr 475 nm und 550 nm ist jedoch weniger effizient. Unterschiede von Pflanzenkultur zu Pflanzenkultur beziehungsweise von Pflanze zu Pflanze sollten des Weiteren ebenfalls berücksichtigt werden.

Trotzdem brauchen Pflanzen dennoch ein möglichst ausgeglichenes Lichtspektrum. Ein zu geringer Blaulichtanteil führt dazu, dass die Pflanze 'schießt' (übermäßiges Stängelwachstum) oder ihre Blätter sich gelb verfärben können. Auch das Verhältnis rot/tiefrot ist für die Pflanzenentwicklung wichtig. Ein niedriger Tiefrotanteil schränkt das Stängelwachstum ein. Diese Sensibilität kann von Pflanzenkultur zu Pflanzenkultur beziehungsweise von Pflanze zu Pflanze unterschiedlich sein.

Eine Funktionsschicht kann dabei zum Beispiel jede Schicht umfassen, welche die Transmission einer Verglasung in mindestens einem bestimmten Wellenlängenbereich oder den Anteil an diffusem Durchlicht beziehungsweise diffusem transmittiertem Licht verändert und/oder in irgendeiner Weise beeinflusst.

Die Funktionsschicht umfaßt mindestens eine Metall- und/oder Metalloxidschicht. Eine solche Schicht zur Anpassung der Transmission mindestens eines Teils der Verglasung des erfindungsgemäßen Gewächshaussystems an den PAR-Bereich der jeweiligen Pflanzenkultur kann dabei zum Beispiel eine speziell an die jeweilige Pflanzenkultur angepasste Low-E-Schicht sein, welche normalerweise nur Infrarotstrahlen reflektiert und/oder absorbiert und hier jedoch zur Anpassung der Transmission an den PAR-Bereich der jeweiligen Pflanzenkultur beziehungsweise zur Beeinflussung der Transmission, der Reflexion und der Absorption im gesamtem Wellenlängenbereich verwendet werden kann. Eine solche Schicht umfaßt mindestens eine Metall- und/oder Metalloxidschicht .

Die Dicke der Metall- und/oder Metalloxidschicht kann dabei zum Beispiel zwischen 1 nm und 65 nm, bevorzugt zwischen 3 nm und 50 nm, weiter bevorzugt zwischen 4 und 40 nm, weiter bevorzugt zwischen 5 nm und 30 nm, weiter bevorzugt zwischen 6 nm und 25 nm, weiter bevorzugt zwischen 7 nm und 20 nm, besonders bevorzugt zwischen 8 nm und 15 nm betragen.

In einer bevorzugten Ausführungsform der vorliegenden Erfindung kann eine Funktionsschicht mindestens zwei Metall- und/oder Metalloxidschichten umfassen. In einer weiter bevorzugten Ausführungsform der vorliegenden Erfindung kann eine Funktionsschicht mindestens zwei Metall- und/oder Metalloxidschichten mit unterschiedlichen Dicken umfassen. Durch die Variation der einzelnen Schichtdicken kann dabei eine Anpassung an den PAR-Bereich der jeweiligen Pflanzenkultur beziehungsweise eine hohe Transmission in den wichtigen, da für die Fotosynthese besonders effizienten Wellenlängenbereichen von 400 nm bis 475 nm und von 600 nm bis 700 nm zu erreicht werden. Je mehr Schichten verwendet werden, umso mehr Parameter können verändert und/oder gegebenenfalls aufeinander abgestimmt werden um eine besonders flexible und/oder effiziente und/oder genaue Anpassung an den PAR-Bereich der jeweiligen Pflanzenkultur beziehungsweise eine hohe Transmission in den wichtigen, da für die Fotosynthese besonders effizienten Wellenlängenbereichen, von 400 nm bis 475 nm und von 600 nm bis 700 nm zu ermöglichen.

In der vorliegenden Erfindung umfaßt eine Funktionsschicht mindestens eine Silberschicht. Diese Silberschicht kann dabei die Reflexion und die Transmission mindestens eines Teils der Verglasung des erfindungsgemäßen Gewächshaussystems im gesamten Wellenlängenbereich beeinflussen.

Die Dicke der Silberschicht kann dabei zum Beispiel zwischen 2,5 nm und 30 nm, bevorzugt zwischen 3 nm und 25 nm, weiter bevorzugt zwischen 3,5 und 20 nm, weiter bevorzugt zwischen 4 nm und 15 nm, weiter bevorzugt zwischen 4,5 nm und 14 nm, besonders bevorzugt zwischen 5 nm und 13 nm betragen.

Bei einer dünnen Silberschicht ist die Transmission der Silberschicht allgemein im Vergleich zu einer dickeren Silberschicht höher. Zudem ist die Transmission insbesondere im Wellenlängenbereich zwischen 600 nm und 800 nm bei einer dünnen Silberschicht im Vergleich zu einer dickeren Silberschicht höher.

Durch eine Variation der Dicke der Silberschicht kann die Transmission der Verglasung an den PAR-Bereich der jeweiligen Pflanzenkultur beziehungsweise der jeweiligen Pflanze angepasst werden. Zudem kann dadurch eine hohe Transmission in den wichtigen, da für die Fotosynthese besonders effizienten Wellenlängenbereichen, von 400 nm bis 475 nm und von 600 nm bis 700 nm erreicht werden. Darüber hinaus kann auch die Transmission von IR-Strahlung durch eine Silberschicht reduziert werden. Demzufolge kann ein Aufheizen des Gewächshaussystems zum Beispiel bei starker Lichteinstrahlung reduziert werden. Jedoch sollte berücksichtigt werden, dass die Silberschicht(en) gemäß der vorliegenden Erfindung zur Anpassung der Transmission der Verglasung an den PAR-Bereich der jeweiligen Pflanzenkultur beziehungsweise der jeweiligen Pflanze beziehungsweise zum Erreichen einer hohe Transmission in den wichtigen, da für die Fotosynthese besonders effizienten Wellenlängenbereichen, von 400 nm bis 475 nm und von 600 nm bis 700 nm verwendet wird. Sollten sich daraus eine höhere Transmission im IR-Bereich oder Verfärbungen im Vergleich zu einer konventionell als Low-E-Schicht verwendeten Silberschicht ergeben, so kann dieses in Kauf genommen werden, um eine besonders gute Anpassung an den PAR-Bereich der jeweiligen Pflanzenkultur beziehungsweise der jeweiligen Pflanze beziehungsweise eine hohe Transmission in den wichtigen, da für die Fotosynthese besonders effizienten Wellenlängenbereichen, von 400 nm bis 475 nm und von 600 nm bis 700 nm zu erreichen.

In einer besonders bevorzugten Ausführungsform des Gewächshaussystems gemäß der vorliegenden Erfindung kann mindestens ein Teil der Verglasung des Gewächshaussystems eine zusätzliche zweite Silberschicht umfassen.

Durch Variationen der Dicken der Silberschichten und durch deren Abstimmung aufeinander kann die Transmission der Verglasung besonders flexibel und/oder effizient und/oder genau an den PAR-Bereich der jeweiligen Pflanzenkultur beziehungsweise der jeweiligen Pflanze angepasst werden. Zudem kann dadurch eine besonders flexibel und/oder effizient und/oder genau eine hohe Transmission in den wichtigen, da für die Fotosynthese besonders effizienten Wellenlängenbereichen, von 400 nm bis 475 nm und von 600 nm bis 700 nm erreicht werden. Das ist dadurch möglich, dass bei zwei vorhandenen Silberschichten die Dicke beider Silberschichten verändert werden kann. Es gibt demnach mehr Parameter, welche verändert und/oder aufeinander abgestimmt werden können, um eine besonders flexible und/oder effiziente und/oder genaue Anpassung an den PAR-Bereich der jeweiligen Pflanzenkultur beziehungsweise der jeweiligen Pflanze beziehungsweise eine hohe Transmission in den wichtigen, da für die Fotosynthese besonders effizienten Wellenlängenbereichen, von 400 nm bis 475 nm und von 600 nm bis 700 nm zu ermöglichen.

Darüber hinaus kann mindestens ein Teil der Verglasung des Gewächshaussystems mindestens eine Zinnoxidschicht umfassen. Die Zinnoxidschicht kann dabei als Interferenzschicht dienen, welche die Farbe, Reflexion und Transmission des Schichtsystems beeinflussen kann. Eine Erhöhung der Dicke dieser Schicht kann zum Beispiel zu einer Erhöhung der Reflexion und einer Reduzierung der Transmission führen. Darüber hinaus beeinflusst diese Schicht auch die Transmission im Blaubereich. Die Transmission im Blaubereich kann dabei durch eine sehr geringe Schichtdicke erhöht werden.

Darüber hinaus umfaßt mindestens ein Teil der Verglasung des Gewächshaussystems mindestens eine Zinkoxidschicht. Die Zinkoxidschicht kann dabei ebenfalls als Interferenzschicht dienen, welche die Farbe, Reflexion und Transmission des Schichtsystems beeinflussen kann. Eine Erhöhung der Dicke dieser Schicht kann zum Beispiel zu einer Erhöhung der Reflexion und einer Reduzierung der Transmission führen. Zudem kann eine Zinkoxidschicht auch als Kristallisationsgrundlage für die Silberschicht dienen. Durch die Verwendung einer Zinkoxidschicht als Kristallisationsgrundlage für eine Silberschicht kann eine Silberschicht erhalten werden, welche eine besonders hohe Transmission bei gleichzeitig besonders guter Isolierung beziehungsweise geringer Transmission im IR-Bereich ermöglicht. Darüber hinaus sind die Zinkoxidschichten auch mit Aluminium dotiert. Dadurch kann die Resistenz der Zinkoxidschicht gegen Korrosion beziehungsweise Oxidation erhöht werden.

Darüber hinaus kann mindestens ein Teil der Verglasung des Gewächshaussystems mindestens eine NiCrOx-Schicht umfassen. Es handelt sich dabei um eine substöchiometrische Oxidschicht, bei der x daher bevorzugterweise < 4 sein kann. Die NiCrOx-Schicht kann eine benachbarte Silberschicht vor Korrosion beziehungsweise Oxidation schützen. Demnach kann sie dafür sorgen, dass die Silberschicht ihre Funktion über einen sehr langen Zeitraum gewährleisten kann. Eine Variation der Schichtdicke kann zudem auch die Transmission insbesondere im Wellenlängenbereich über 700 nm beeinflussen, da die NiCrOx-Schicht einen Teil der Strahlung insbesondere im Wellenlängenbereich über 700 nm absorbiert. Eine dickere NiCrOx-Schicht führt dabei zu einer reduzierten Transmission.

Darüber hinaus kann mindestens ein Teil der Verglasung des Gewächshaussystems mindestens eine ZnSnAlOx-Schicht umfassen. Es handelt sich dabei um eine substöchiometrische Oxidschicht, bei der x daher bevorzugterweise ≤ 4 sein kann. Die ZnSnAlOx-Schicht dient dabei zum Beispiel dazu, den gesamten Schichtaufbau vor Korrosion beziehungsweise Oxidation zu schützen. Darüber hinaus beeinflusst diese Schicht jedoch ebenfalls die Transmission und Reflexion. Eine dickere ZnSnAlOx-Schicht führt dabei zu einer erhöhten Reflexion und zu einer reduzierten Transmission.

Eine beispielhafte Funktionsschicht könnte dabei zum Beispiel den folgenden Aufbau umfassen:
- eine Zinnoxidschicht,
- eine mit Aluminium dotierte Zinkoxidschicht,
- eine Silberschicht,
- eine NrCrOx-Schicht,
- eine Zinnoxidschicht,
- eine ZnSnAlOx-Schicht,
- eine Zinnoxidschicht,
- eine mit Aluminium dotierte Zinkoxidschicht,
- eine Silberschicht,
- eine NrCrOx-Schicht,
- eine Zinnoxidschicht,
- eine ZnSnAlOx-Schicht.

Der Schichtaufbau, welcher zwischen den beiden Silberschichten angeordnet ist und eine NrCrOx-Schicht, eine Zinnoxidschicht, eine ZnSnAlOx-Schicht, eine weitere Zinnoxidschicht, eine weitere mit Aluminium dotierte Zinkoxidschicht umfasst, kann dabei als Antireflexschicht zur Entspiegelung der Silberschichten dienen. Eine Erhöhung der Dicke dieses Schichtaufbaus kann dabei zu mehr Reflexion und weniger Transmission führen.

Im Gegensatz dazu würde eine Erhöhung der Dicke der Schichtaufbauten, welche jeweils oberhalb beziehungsweise unterhalb der beiden Silberschichten angeordnet sind und jeweils eine Zinnoxidschicht und eine mit Aluminium dotierte Zinkoxidschicht beziehungsweise eine NrCrOx-Schicht, eine Zinnoxidschicht und eine ZnSnAlOx-Schicht umfassen, zu weniger Reflexion und mehr Transmission führen.

Die Dicke jeder dieser Schichten kann dabei zum Beispiel zwischen 1 nm und 65 nm, bevorzugt zwischen 3 nm und 50 nm, weiter bevorzugt zwischen 4 und 40 nm, weiter bevorzugt zwischen 5 nm und 30 nm, weiter bevorzugt zwischen 6 nm und 25 nm, weiter bevorzugt zwischen 7 nm und 20 nm, besonders bevorzugt zwischen 8 nm und 15 nm betragen.

Je mehr Schichten verwendet werden, umso mehr Parameter können verändert und/oder gegebenenfalls aufeinander abgestimmt werden, um eine besonders flexible und/oder effiziente und/oder genaue Anpassung an den PAR-Bereich der jeweiligen Pflanzenkultur beziehungsweise der jeweiligen Pflanze beziehungsweise eine hohe Transmission in den wichtigen, da für die Fotosynthese besonders effizienten Wellenlängenbereichen, von 400 nm bis 475 nm und von 600 nm bis 700 nm zu ermöglichen. Dabei können die Effekte von bestimmten Parametern die Effekte von anderen Parametern auch wieder ganz oder teilweise kompensieren.

Die Dicke jeder einzelnen dieser Schichten kann dabei verändert werden, um eine besonders flexible und/oder effiziente und/oder genaue Anpassung an den PAR-Bereich der jeweiligen Pflanzenkultur beziehungsweise der jeweiligen Pflanze beziehungsweise eine hohe Transmission in den wichtigen, da für die Fotosynthese besonders effizienten Wellenlängenbereichen, von 400 nm bis 475 nm und von 600 nm bis 700 nm zu ermöglichen. Zudem kann jede dieser Schichten zum Beispiel durch Sputtern oder Bedampfen hergestellt werden.

Des Weiteren kann eine Funktionsschicht auch eine Schicht umfassen, welche den Anteil an diffusem Durchlicht beziehungsweise diffusem transmittiertem Licht beeinflusst. Beispielsweise kann eine solche Funktionsschicht zum Beispiel eine aufgeraute Glasscheibe beziehungsweise eine Milchglasscheibe, eine transluzente Glasscheibe mit Pigmenten, eine Nörpelglasscheibe, eine aufgeraute Polymerfolie oder eine transluzente Polymerfolie umfassen. Umso aufgerauter die Glasscheibe oder die Polymerfolie, umso höher wird der Anteil an diffusem Durchlicht. Darüber hinaus kann der Anteil an diffusem Durchlicht anhand des Motivs beziehungsweise der Struktur des Nörpelglases variiert werden. Alternativ kann der Anteil an diffusem Durchlicht auch dadurch variiert werden, dass ein anderes transluzentes Polymermaterial verwendet wird oder dass der Anteil oder die Art der Pigmente im und/oder auf dem Polymermaterial beziehungsweise in und/oder auf der Glasscheibe verändert wird. Beispielsweise kann eine transluzente PVB-Folie als Funktionsschicht verwendet werden, um den Anteil an diffusem Durchlicht beziehungsweise diffusem transmittiertem Licht zu erhöhen.

Dabei kann transluzent im Sinne der vorliegenden Erfindung die partielle Lichtdurchlässigkeit eines Körpers bei gleichzeitig auftretender Streuung und insbesondere Volumenstreuung der durchscheinenden Lichtstrahlen beschreiben. In Abgrenzung zur Transparenz kann man Transluzenz als Lichtdurchlässigkeit beschreiben und Transparenz als Bild- oder Blickdurchlässigkeit. Die Volumenstreuung kann dabei zum Beispiel dadurch entstehen, dass transluzente Körper teilweise lichtdurchlässig sind. Im Gegensatz zu lichtundurchlässigen Körpern reflektieren sie auftreffendes Licht daher nicht nur direkt an ihrer Oberfläche, sondern teils erst, nachdem es in den Körper eingedrungen ist. Dabei entsteht die Volumenstreuung dadurch, dass das Licht nicht nur am Eintrittspunkt mit einem dem Eintrittswinkel gleichen Winkel in entgegengesetzter Richtung reflektiert wird, sondern an einem beliebigen Punkt in einer beliebigen Richtung mit einem beliebigen Winkel in Folge der Reflexion austritt, sodass die gegebenenfalls vorhandene parallele Ausrichtung der Lichtstrahlen des eintreffenden Lichtes gestört wird.

Der Anteil an diffusem Durchlicht beziehungsweise diffusem transmittiertem Licht kann dabei zwischen 0 % und 100 %, bevorzugt zwischen 5 % und 95%, weiter bevorzugt zwischen 10% und 90%, weiter bevorzugt zwischen 15% und 85%, weiter bevorzugt zwischen 20% und 80%, weiter bevorzugt zwischen 25% und 75%, weiter bevorzugt zwischen 30% und 70%, weiter bevorzugt zwischen 35% und 65%, weiter bevorzugt zwischen 40% und 60%, besonders bevorzugt zwischen 45% und 55% variiert werden.

Dank verschiedener Materialien und Parameter, wie zum Beispiel die Rauheit, die Verwendung von Pigmenten und/oder die Art der Pigmente und/oder den Anteil an Pigmenten, kann der Anteil an diffusem Durchlicht beziehungsweise diffusem transmittiertem Licht sehr gut an das Optimum für die jeweilige Pflanzenkultur beziehungsweise für die jeweilige Pflanze angenähert werden.

In einer besonderen Ausführungsform des erfindungsgemäßen Gewächshaussystems kann mindestens eine Funktionsschicht, welche den Anteil an diffusem Durchlicht beziehungsweise diffusem transmittiertem Licht beeinflusst, innerhalb der VSG-Scheibe angeordnet werden. Dies ist möglich, da zum Beispiel eine transluzente PVB-Folie als Funktionsschicht, welche den Anteil an diffusem Durchlicht beziehungsweise diffusem transmittiertem Licht beeinflusst, verwendet werden kann. Dabei verbindet diese transluzente PVB-Folie beide Glasscheiben der VSG-Scheibe genauso fest miteinander wie eine transparente PVB-Folie.

In einer besonderen Ausführungsform des erfindungsgemäßen Gewächshaussystems kann mindestens eine Funktionsschicht auf einer der Außenseite des Gewächshaussystems nahen Glasscheibe der Verglasung des Gewächshaussystems und insbesondere auf der Innenseite dieser Glasscheibe angebracht werden. Dadurch kann die Isolierung des Innenraums des Gewächshaussystems gegebenenfalls verbessert beziehungsweise Transmission im IR-Bereich reduziert werden. Durch die besondere Anordnung der Funktionsschicht kann gegebenenfalls die Aufwärmung des Innenraums des Gewächshaussystems zum Beispiel starker Lichteinstrahlung reduziert werden, da weniger IR-Strahlung in das Gewächshaussystem eindringt.

In einer weiteren besonderen Ausführungsform des erfindungsgemäßen Gewächshaussystems kann mindestens eine Funktionsschicht auf einer dem Innenraum des Gewächshaussystems nahen Glasscheibe der Verglasung des Gewächshaussystems und insbesondere auf der Innenseite dieser Glasscheibe angebracht werden. Dadurch kann die Isolierung des Innenraums des Gewächshaussystems gegebenenfalls verbessert beziehungsweise Transmission im IR-Bereich reduziert werden. Durch die besondere Anordnung der Funktionsschicht kann gegebenenfalls die Abkühlung des Innenraums des Gewächshaussystems zum Beispiel geringer Lichteinstrahlung und/oder bei niedrigen Außentemperaturen reduziert werden, da weniger IR-Strahlung das Gewächshaussystem verlässt.

In einer weiteren besonderen Ausführungsform des erfindungsgemäßen Gewächshaussystems kann mindestens ein Teil der Verglasung des Gewächshaussystems mindestens zwei parallel angeordnete und miteinander verbundene Glasscheiben, welche mindestens einen abgeschlossenen Zwischenraum bilden, und insbesondere eine Isolierverglasung umfassen. Dabei sind mindestens zwei parallel angeordnete und miteinander verbundene Glasscheiben, welche mindestens einen abgeschlossenen Zwischenraum bilden, zur Bildung einer lsolierverglasung auf Distanz zueinander angeordnet. Eine der Glasscheiben kann dabei auch eine VSG-Glasscheibe (Verbunsicherheitsglas) sein, welche zwei durch eine Polymerfolie und insbesondere durch eine Polyvinylbutyralfolie (PVB-Folie) miteinander fest verbundene Glasscheiben umfasst. Des Weiteren kann mindestens ein Teil der Verglasung des erfindungsgemäßen Gewächshaussystems auch mindestens drei parallel angeordnete und miteinander verbundene Glasscheiben, welche mindestens zwei abgeschlossene Zwischenräume bilden, umfassen.

Im Zwischenraum zwischen den auf Distanz angeordneten Glasscheiben der Isolierverglasung kann dabei zum Beispiel ein Unterdruck beziehungsweise ein Vakuum herrschen. Alternativ kann der Zwischenraum zwischen den auf Distanz angeordneten Glasscheiben der Isolierverglasung mit einem Gas beziehungsweise Gasgemisch wie zum Beispiel Luft, Ar, Xe, Kr oder Mischungen davon gefüllt sein. Die Distanz zwischen zwei auf Distanz zueinander parallel angeordneten und miteinander verbundenen Glasscheiben zur Bildung einer Isolierverglasung kann dabei zum Beispiel zwischen 4 mm und 30 mm, bevorzugt zwischen 6 mm und 20 mm, weiter bevorzugt zwischen 7 mm und 18 mm, weiter bevorzugt zwischen 8 mm und 16 mm, weiter bevorzugt zwischen 10 mm und 14 mm, besonders bevorzugt zwischen 12 mm und 13 mm betragen. Dadurch, dass mindestens ein Teil der Verglasung des Gewächshaussystems mindestens zwei parallel angeordnete und miteinander verbundene Glasscheiben, welche mindestens einen abgeschlossenen Zwischenraum bilden, und insbesondere eine Isolierverglasung umfasst, kann die Isolierung des Gewächshaussystems stark verbessert werden. Daher sinken die Energiekosten zum Heizen beziehungsweise zum Kühlen des Gewächshaussystems.

In einer weiteren besonderen Ausführungsform des erfindungsgemäßen Gewächshaussystems kann mindestens ein Teil der Verglasung des Gewächshaussystems eine bruchsichere Schicht umfassen. Bevorzugterweise kann eine bruchsichere Schicht dabei mindestens eine zwischen zwei Glasscheiben angeordnete Polymerfolie umfassten, wobei die Polymerfolie beide Glasscheiben bevorzugterweise fest miteinander verbindet. Dadurch kann der Bruch der Verglasung und insbesondere der Durchbruch durch die Verglasung zum Beispiel beim Betreten der Verglasung zum Beispiel während der Reinigung, weitestgehend verhindert werden.

In einer besonders bevorzugten Ausführungsform des erfindungsgemäßen Gewächshaussystems kann mindestens ein Teil der Verglasung des Gewächshaussystems mindestens eine zwischen zwei Glasscheiben angeordnete Polyvinylbutyralfolie umfassen, welche beide Glasscheiben bevorzugterweise fest miteinander verbindet, sodass mindestens ein Teil der Verglasung des Gewächshaussystems mindestens eine VSG-Glasscheibenanordnung umfasst. Dadurch kann der Bruch der Verglasung und insbesondere der Durchbruch durch die Verglasung, zum Beispiel beim Betreten der Verglasung zum Beispiel während der Reinigung, weitestgehend verhindert werden. Dabei kann die VSG-Scheibe bevorzugterweise nahe der Außenseite der Verglasung des erfindungsgemäßen Gewächshaussystems angeordnet sein.

In einer besonders bevorzugten Ausführungsform des erfindungsgemäßen Gewächshaussystems kann mindestens ein Teil der Verglasung des Gewächshaussystems mindestens eine Maßnahme zur Reduzierung der Lichtreflexion umfassen. Dabei kann jede Schicht oder Behandlung, welche die Reflexion von Licht und insbesondere von Licht im PAR-Bereich reduziert, als eine Maßnahme zur Reduzierung der Lichtreflexion verwendet werden. Insbesondere kann zum Beispiel die Oberfläche einer Glasscheibe zur Reduzierung der Reflexion zum Beispiel durch Ätzen leicht aufgeraut werden. Darüber hinaus kann zum Beispiel eine Schicht beziehungsweise ein Schichtaufbau auf Basis von SiO₂ und TiO₂ und insbesondere ein Vierschichtaufbau, welcher eine Schicht SiO₂, eine darüber angeordnete Schicht TiO₂, eine wiederum darüber angeordnete Schicht SiO₂ und eine abschließend darüber angeordnete Schicht TiO₂ umfasst, oder eine Beschichtung mit SiO2-Nanopartikeln beziehungsweise Gelen davon zur Reduzierung der Lichtreflexion verwendet werden. Durch eine Maßnahme zur Reduzierung der Lichtreflexion kann die Transmission allgemein erhöht werden, sodass mehr Licht auf die Pflanzenkultur fällt. Dabei sollte berücksichtigt werden, dass mehr Licht auch einen höheren Kulturertrag bedeutet. Eine Maßnahme zur Reduzierung der Lichtreflexion kann dabei bevorzugt an der Außenseite der Verglasung des Gewächshaussystems vorgenommen werden.

Zudem kann die Transmission auch durch die Dicke der verwendeten Glasscheiben beeinflusst werden. Dünnere Glasscheiben ermöglichen dabei eine höhere Transmission. Jedoch sollte bei der Verwendung von dünneren Glasscheiben darauf geachtet werden, dass eine ausreichende mechanische Stabilität der Verglasung erhalten bleibt.

In einer besonders bevorzugten Ausführungsform des erfindungsgemäßen Gewächshaussystems kann mindestens ein Teil der Verglasung des Gewächshaussystems mindestens eine Schicht zur Reduzierung der Bildung von Kondenswassertropfen umfassen. Eine solche Schicht kann zum Beispiel eine beliebige hydrophobe oder superhydrophobe Schicht umfassen. Eine solche hydrophobe Schicht kann dabei zum Beispiel hydrophobe und insbesondere fluorierte Silane umfassen. Durch eine Schicht zur Reduzierung der Bildung von Kondenswassertropfen, welche bevorzugterweise auf der Innenseite der Verglasung des Gewächshaussystems angebracht werden kann, kann die Beschädigung (Bildung von braunen Flecken) der kultivierten Pflanzen durch herabtropfendes Kondenswasser weitestgehend verhindert werden.

In einer besonders bevorzugten Ausführungsform des erfindungsgemäßen Gewächshaussystems kann mindestens ein Teil der Verglasung des Gewächshaussystems so ausgestaltet sein, dass Lichtquellen und besonders bevorzugt Leuchtdioden und/oder OLED-Folien, welche bevorzugt im PAR-Bereich der jeweiligen Pflanzenkultur emittieren, entweder in der Verglasung selbst integriert (zum Beispiel als Leuchtdioden innerhalb einer Isolierverglasung, insbesondere über die Fläche dieser Verglasung verteilt) oder am Rande der Verglasung insbesondere zum Beispiel innerhalb des Rahmens der Verglasung angebracht werden können, sodass sie die Verglasung und insbesondere die darunter liegende(n) Pflanzenkultur(en) bestrahlen können. Dadurch kann das Pflanzenwachstum auch bei geringer Lichteinstrahlung insbesondere in der Nacht angeregt werden. Daraus ergeben sich ein schnelleres Pflanzenwachstum und ein höherer Ertrag.

In einer besonders bevorzugten Ausführungsform des erfindungsgemäßen Gewächshaussystems kann das Gewächshaussystem mindestens zwei verschiedene Zonen umfassen. Dabei kann eine Zone jeder Teil des Gewächshaussystems sein, welcher sich von mindestens einem angrenzenden Teil durch mindestens eine Eigenschaft unterscheidet. Insbesondere kann sich eine Zone des Gewächshaussystems von mindestens einer benachbarten Zone dabei zum Beispiel durch die Temperatur, die Luftfeuchtigkeit, die vorhandene Pflanzenkultur, die logistische Gestaltung und die Art der Verglasung unterscheiden. Dadurch können mehrere unterschiedliche Pflanzenkulturen in einem einzigen Gewächshaussystem unter optimalen Bedingungen kultiviert werden.

In einer besonders bevorzugten Ausführungsform des erfindungsgemäßen Gewächshaussystems kann das Gewächshaussystem mindestens zwei verschiedene Zonen mit unterschiedlichen Verglasungen umfassen, welche gegebenenfalls dank unterschiedlicher erfindungsgemäßer Funktionsschichten an die in der jeweiligen Zone befindlichen Pflanzenkultur angepasst sind. Dadurch können mehrere unterschiedliche Pflanzenkulturen in einem einzigen Gewächshaussystem unter optimalen Bedingungen mit einem hohen Ertrag kultiviert werden.

### Kurze Beschreibung der Zeichnungen:

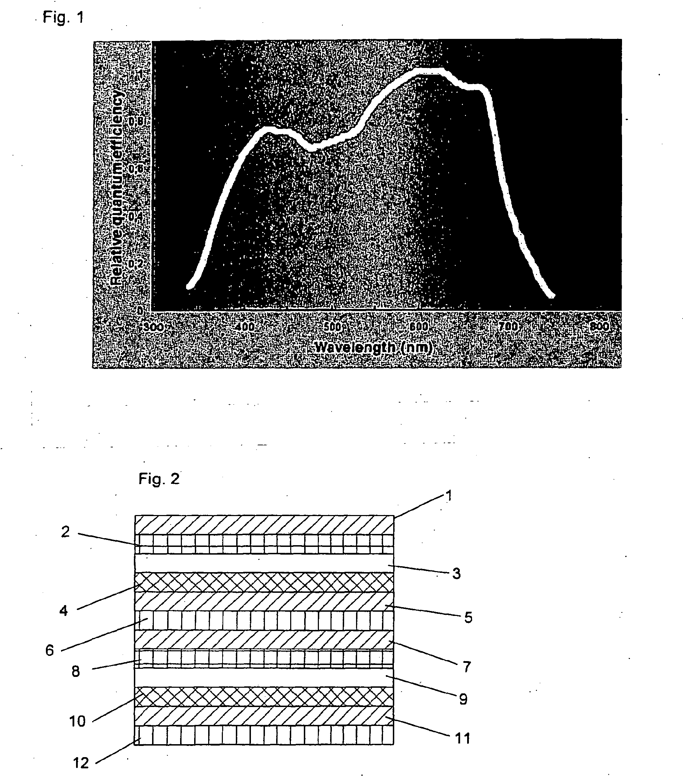

Fig. 1 stellt die Effizienz einer elektromagnetischen Strahlung für die Fotosynthese als Funktion der Wellenlänge dar. Der PAR-Bereich umfasst dabei zumeist zum Beispiel einen Wellenlängenbereich von 300 nm bis 800 nm, bevorzugt von 400 nm bis 700 nm. Innerhalb dieses Bereiches tragen bestimmte Wellenlängen nochmals in besonders effizienter Weise zur Fotosynthese und damit zum Pflanzenwachstum bei. Das gelb/orange Licht im Wellenlängenbereich zwischen ungefähr 550 nm und 600 nm insbesondere zwischen 600 nm und 650 nm ist dabei besonders effizient. Auch rotes Licht im Wellenlängenbereich zwischen ungefähr 650 nm und 700 nm ist sehr effizient. Blau/grünes Licht im Wellenlängenbereich zwischen ungefähr 400 nm und 475 nm ist ebenfalls effizient. Grün/gelbes Licht im Wellenlängenbereich zwischen ungefähr 475 nm und 550 nm ist jedoch weniger effizient. Unterschiede von Pflanzenkultur zu Pflanzenkultur beziehungsweise von Pflanze zu Pflanze sollten des Weiteren ebenfalls berücksichtigt werden.

Fig. 2 zeigt einen beispielhaften Schichtaufbau für eine Funktionsschicht, welche die Transmission der Verglasung beeinflussen kann. Der Schichtaufbau umfasst dabei folgende Schichten:
- eine Zinnoxidschicht (1),
- eine mit Aluminium dotierte Zinkoxidschicht (2),
- eine Silberschicht (3),
- eine NrCrOx-Schicht (4),
- eine Zinnoxidschicht (5),
- eine ZnSnAlOx-Schicht (6),
- eine Zinnoxidschicht (7),
- eine mit Aluminium dotierte Zinkoxidschicht (8),
- eine Silberschicht (9),
- eine NrCrOx-Schicht (10),
- eine Zinnoxidschicht (11),
- eine ZnSnAlOx-Schicht (12).

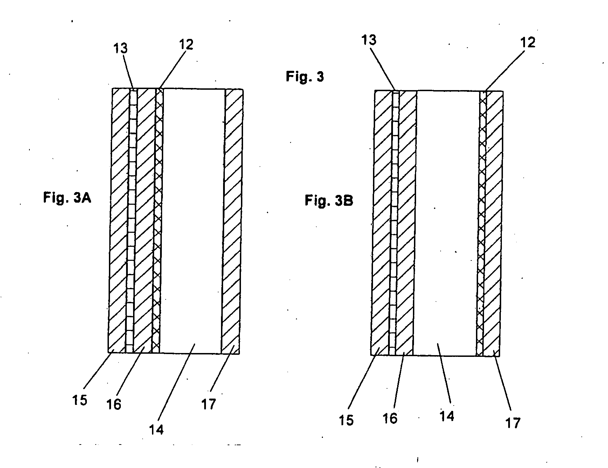

Fig. 3 zeigt zwei beispielhafte Aufbauten, welche für mindestens einen Teil der Verglasung eines erfindungsgemäßen Gewächshaussystems verwendet werden können.

Fig. 3A zeigt dabei eine besondere Ausführungsform des erfindungsgemäßen Gewächshaussystems, bei dem mindestens eine Funktionsschicht (12) auf der Innenseite einer der Außenseite des Gewächshaussystems nahen Glasscheibe (16) der Verglasung des Gewächshaussystems angebracht ist.

Fig. 3B zeigt dabei eine weitere besondere Ausführungsform des erfindungsgemäßen Gewächshaussystems, bei dem mindestens eine Funktionsschicht (12) auf der Innenseite einer dem Innenraum des Gewächshaussystems nahen Glasscheibe (17) der Verglasung des Gewächshaussystems angebracht ist.

### Bezugszeichenliste:

- 13: PVB-Folie
- 14: Innerhalb der Isolierverglasung gebildeter abgeschlossener Zwischenraum
- 15, 16 und 17: Glasscheiben

### Ausführungsbeispiele:

1) Gewächshaussystem, welches eine Orchideenkultur umfasst, wobei die Dachverglasung des Gewächshaussystems mindestens eine an diese Orchideenkultur angepasste Funktionsschicht umfasst. Ein entsprechendes erfindungsgemäßes Gewächshaussystem umfasst dabei als Funktionsschicht eine transluzente PVB-Folie, welche den Anteil an diffusem Durchlicht beziehungsweise an diffusem transmittiertem Licht auf ungefähr 50% erhöht. Diese Folie kann als Funktionsschicht dabei zum Beispiel an der Innenseite einer dem Innenraum des Gewächshaussystems nahen Glasscheibe (in diesem Fall die zum Innenraum des Gewächshaussystems hin liegende Scheibe der Isolierverglasung) oder besonders bevorzugt innerhalb der VSG-Scheibe angebracht werden, sodass die transluzente PVB-Folie beide Glasscheiben der VSG-Scheibe fest miteinander verbindet. Der dadurch erhaltene hohe Anteil an diffusem Durchlicht beziehungsweise an diffusem transmittiertem Licht ist für Orchideenkulturen besonders wichtig, da diese bei direkter Sonneneinstrahlung schlechter gedeihen.
   Des Weiteren kann ein entsprechendes erfindungsgemäßes Gewächshaussystem als weitere Funktionsschicht einen Schichtaufbau umfassen, der zum Beispiel wie folgt gestaltet ist:
   - eine 17,3 nm dicke Zinnoxidschicht,
   - eine 6,5 nm dicke mit Aluminium dotierte Zinkoxidschicht,
   - eine 12,8 nm dicke Silberschicht,
   - eine 6 nm dicke NrCr-Schicht,
   - eine 28,5 nm dicke Zinnoxidschicht,
   - eine 9,2 nm dicke ZnSnAlOx-Schicht,
   - eine 22 nm dicke Zinnoxidschicht,
   - eine 6,2 nm dicke mit Aluminium dotierte Zinkoxidschicht,
   - eine 13,2 nm dicke Silberschicht,
   - eine 4,9 nm dicke NrCr-Schicht,
   - eine 10,9 nm dicke Zinnoxidschicht,
   - eine 7 nm dicke ZnSnAlOx-Schicht.
   Dieser Schichtaufbau bietet eine hohe Transmission im für Orchideen relevanten PAR-Bereich von 400 nm bis 700 nm bei gleichzeitig geringer Transmission im IR-Bereich. Dies ist für Orchideenkulturen besonders wichtig, da sie bei zu hoher Einstrahlung im IR-Bereich nur schwer gedeihen.
   Dieser Schichtaufbau kann dabei bevorzugt auf der Innenseite einer der Außenseite des Gewächshaussystems nahen Glasscheibe (also in diesem Fall der VSG-Scheibe) der Verglasung des Gewächshaussystems angebracht werden. Dadurch kann ein Aufheizen des Gewächshaussystems zum Beispiel bei starker Lichteinstrahlung, welches für Orchideen nicht erwünscht ist, reduziert werden.
   Dadurch kann eine optimale Kultivierung der Orchideen gewährleistet werden.
   Zudem kann die der Außenseite des Gewächshauses zugewandte Glasscheibe als VSG-Scheibe ausgeführt sein. Dadurch kann ein Einbruch beziehungsweise ein Durchbruch beim zufälligen Betreten der Verglasung zum Beispiel beim Reinigen derselben vermieden werden.
   Schließlich kann diese der Außenseite des Gewächshauses zugewandte Glasscheibe als VSG-Scheibe, welche zwei durch eine PVB-Folie fest verbundene Glasscheiben umfasst, auch Teil einer Isolierverglasung sein, welche mit einer nahe der Innenseite des Gewächshauses befindlichen Glasscheibe gebildet wird. Dadurch kann die Isolierung des Gewächshaussystems verbessert werden.
   Jede der drei verwendeten Glasscheiben ist dabei 4 mm dick. Der Abstand zwischen beiden Scheiben der Isolierverglasung beträgt 16 mm. Der dadurch gebildete Zwischenraum ist mit einem Ar/Luft Gemisch gefüllt, welches 90% Ar umfasst.
   Insbesondere im PAR -Bereich ist die Transmission dabei besonders hoch. Der Anteil an diffusem Durchlicht beziehungsweise an diffusem transmittiertem Licht beträgt 50 %.
2) Gewächshaussystem, welches eine Tomatenkultur umfasst, wobei die Dachverglasung des Gewächshaussystems mindestens eine an diese Orchideenkultur angepasste Funktionsschicht umfasst.
   Ein entsprechendes erfindungsgemäßes Gewächshaussystem kann als Funktionsschicht einen Schichtaufbau umfassen, der zum Beispiel wie folgt gestaltet ist:
   - eine 33 nm dicke Zinnoxidschicht,
   - eine 6 nm dicke mit Aluminium dotierte Zinkoxidschicht,
   - eine 5,1 nm dicke Silberschicht,
   - eine 6 nm dicke NrCrOx-Schicht,
   - eine 28 nm dicke Zinnoxidschicht,
   - eine 9,2 nm dicke ZnSnAlOx-Schicht,
   - eine 26 nm dicke Zinnoxidschicht,
   - eine 6 nm dicke mit Aluminium dotierte Zinkoxidschicht,
   - eine 10 nm dicke Silberschicht,
   - eine 4,9 nm dicke NrCrOx-Schicht,
   - eine 21 nm dicke Zinnoxidschicht,
   - eine 7 nm dicke ZnSnAlOx-Schicht.
   Dieser Schichtaufbau bietet eine sehr hohe Transmission im für Tomaten relevanten PAR-Bereich von 400 nm bis 700 nm bei gleichzeitig hoher Transmission im IR-Bereich (zum Beispiel im Wellenlängenbereich von 700nm bis 800 nm). Dies ist für Tomatenkulturen besonders wichtig, da sie bei zu geringer Einstrahlung im IR-Bereich und/oder zu geringer Wärme nur schwer gedeihen.
   Dieser Schichtaufbau kann dabei bevorzugt auf der Innenseite einer dem Innenraum des Gewächshaussystems nahen Glasscheibe (in diesem Fall die zum Innenraum des Gewächshaussystems hin liegende Scheibe der Isolierverglasung) der Verglasung des Gewächshaussystems angebracht werden. Dadurch kann die Abkühlung des Gewächshaussystems zum Beispiel bei geringer Lichteinstrahlung, welche für die Tomatenkultur nicht erwünscht ist, reduziert werden.
   Zudem ist ein geringer Anteil an diffusem Durchlicht beziehungsweise an diffusem transmittiertem Licht für Tomaten wünschenswert, da diese bei direkter Sonneneinstrahlung besser gedeihen.
   Dadurch kann eine optimale Kultivierung der Tomaten gewährleistet werden.
   Zudem kann die der Außenseite des Gewächshauses zugewandte Glasscheibe als VSG-Scheibe ausgeführt sein. Dadurch kann ein Einbruch beziehungsweise ein Durchbruch beim zufälligen Betreten der Verglasung, zum Beispiel beim Reinigen derselben, vermieden werden.
   Schließlich kann diese der Außenseite des Gewächshauses zugewandte Glasscheibe als VSG-Scheibe, welche zwei durch eine PVB-Folie fest verbundene Glasscheiben umfasst, auch Teil einer Isolierverglasung sein, welche mit einer nahe der Innenseite des Gewächshauses befindlichen Glasscheibe gebildet wird.
   Jede der drei verwendeten Glasscheiben ist dabei 4 mm dick. Der Abstand zwischen beiden Scheiben der Isolierverglasung beträgt 16 mm. Der dadurch gebildete Zwischenraum ist mit einem Ar/Luft Gemisch gefüllt, welches 90% Ar umfasst.
   Insbesondere im PAR -Bereich ist die Transmission dabei besonders hoch. Der Anteil an diffusem Durchlicht beziehungsweise an diffusem transmittiertem Licht beträgt 0 %.

## Patentansprüche

1. Gewächshaussystem, welches mindestens eine Pflanzenkultur umfasst, wobei mindestens ein Teil der Verglasung des Gewächshaussystems eine Funktionsschicht umfasst,
**dadurch gekennzeichnet,**
**dass** die Funktionsschicht an diese Pflanzenkultur angepasst ist, wobei mindestens ein Teil der Verglasung des Gewächshaussystems mindestens eine Silberschicht und eine mit Aluminium dotierte Zinkoxidschicht umfasst, wobei ferner die Anpassung der Funktionsschicht über eine Variation der Dicke der Silberschicht oder der Anzahl der Silberschichten erfolgt.

2. Gewächshaussystem nach Anspruch 1,
**dadurch gekennzeichnet,**
**dass** die Funktionsschicht die Transmission der Verglasung in mindestens einem bestimmten Wellenlängenbereich und/oder den Anteil an diffusem Durchlicht beziehungsweise an diffusem transmittiertem Licht beeinflusst.

3. Gewächshaussystem nach einem oder beiden der Ansprüche 1 oder 2,
**dadurch gekennzeichnet,**
**dass** mindestens ein Teil der Verglasung des Gewächshaussystems mindestens zwei Silberschichten umfasst.

4. Gewächshaussystem nach einem oder mehreren der Ansprüche 1 bis 3,
**dadurch gekennzeichnet,**
**dass** mindestens ein Teil der Verglasung des Gewächshaussystems mindestens zwei Metall- und/oder Metalloxidschichten mit unterschiedlichen Dicken umfassen.

5. Gewächshaussystem nach einem oder mehreren der Ansprüche 1 bis 4,
**dadurch gekennzeichnet,**
**dass** mindestens ein Teil der Verglasung des Gewächshaussystems mindestens eine transluzente Polymerfolie umfasst.

6. Gewächshaussystem nach einem oder mehreren der Ansprüche 1 bis 5,
**dadurch gekennzeichnet,**
**dass** mindestens eine Funktionsschicht auf einer der Außenseite des Gewächshaussystems nahen Glasscheibe der Verglasung des Gewächshaussystems angebracht ist.

7. Gewächshaussystem nach einem oder mehreren der Ansprüche 1 bis 6,
**dadurch gekennzeichnet,**
**dass** mindestens eine Funktionsschicht auf einer dem Innenraum des Gewächshaussystems nahen Glasscheibe der Verglasung des Gewächshaussystems aufgebracht ist.

8. Gewächshaussystem nach einem oder mehreren der Ansprüche 1 bis 7,
**dadurch gekennzeichnet,**
**dass** mindestens ein Teil der Verglasung des Gewächshaussystems mindestens zwei parallel angeordnete und miteinander verbundene Glasscheiben, welche mindestens einen abgeschlossenen Zwischenraum bilden, umfasst.

9. Gewächshaussystem nach einem oder mehreren der Ansprüche 1 bis 8,
**dadurch gekennzeichnet,**
**dass** mindestens ein Teil der Verglasung des Gewächshaussystems mindestens eine bruchsichere Schicht umfasst.

10. Gewächshaussystem nach einem oder mehreren der Ansprüche 1 bis 9,
**dadurch gekennzeichnet,**
**dass** mindestens ein Teil der Verglasung des Gewächshaussystems mindestens eine zwischen zwei Glasscheiben angeordnete Polymerfolie umfasst.

11. Gewächshaussystem nach einem oder mehreren der Ansprüche 1 bis 10,
**dadurch gekennzeichnet,**
**dass** mindestens ein Teil der Verglasung des Gewächshaussystems mindestens eine zwischen zwei Glasscheiben angeordnete PVB-Folie umfasst.

12. Gewächshaussystem nach einem oder mehreren der Ansprüche 1 bis 11,
**dadurch gekennzeichnet,**
**dass** mindestens ein Teil der Verglasung des Gewächshaussystems mindestens eine VSG-Glasscheibenanordnung umfasst.

13. Gewächshaussystem nach einem oder mehreren der Ansprüche 1 bis 12,
**dadurch gekennzeichnet,**
**dass** mindestens ein Teil der Verglasung des Gewächshaussystems mindestens eine Maßnahme zur Reduzierung der Lichtreflexion umfasst.

14. Gewächshaussystem nach einem oder mehreren der Ansprüche 1 bis 13,
**dadurch gekennzeichnet,**
**dass** mindestens ein Teil der Verglasung des Gewächshaussystems
so ausgestaltet ist, dass mindestens eine Lichtquelle entweder in der Verglasung selbst integriert oder am Rande der Verglasung angebracht ist, sodass sie die darunter liegende(n) Pflanzenkultur(en) bestrahlen kann,

15. Gewächshaussystem nach einem oder mehreren der Ansprüche 1 bis 14,
**dadurch gekennzeichnet,**
**dass** das Gewächshaussystem mindestens zwei verschiedene Zonen mit unterschiedlichen Verglasungen umfasst, welche dank unterschiedlicher Funktionsschichten an die in der jeweiligen Zone befindliche Pflanzenkultur angepasst ist.

## Claims

1. A greenhouse system comprising at least one plant culture, whereby at least part of the glazing of the greenhouse system comprises a functional layer,
**characterized in that**
the functional layer is adapted to this plant culture, whereby at least part of the glazing of the greenhouse system comprises at least one silver layer and one zinc oxide layer doped with aluminum, whereby moreover, the functional layer is adapted by varying the thickness of the silver layer or the number of silver layers.

2. The greenhouse system according to Claim 1,
**characterized in that**
the functional layer influences the transmittance of the glazing in at least a given wavelength range and/or influences the fraction of diffused transmitted light.

3. The greenhouse system according to one or both of Claims 1 or 2,
**characterized in that**
at least part of the glazing of the greenhouse system comprises at least two silver layers.

4. The greenhouse system according to one or more of Claims 1 to 3,
**characterized in that**
at least part of the glazing of the greenhouse system comprises at least two metal and/or metal oxide layers of different thicknesses.

5. The greenhouse system according to one or more of Claims 1 to 4,
**characterized in that**
at least part of the glazing of the greenhouse system comprises at least one translucent polymer film.

6. The greenhouse system according to one or more of Claims 1 to 5,
**characterized in that**
at least one functional layer is applied onto a glass pane of the glazing of the greenhouse system, said glass pane being near the exterior of the greenhouse system.

7. The greenhouse system according to one or more of Claims 1 to 6,
**characterized in that**
at least one functional layer is applied onto a glass pane of the glazing of the greenhouse system, said glass pane being near the interior of the greenhouse system.

8. The greenhouse system according to one or more of Claims 1 to 7,
**characterized in that**
at least part of the glazing of the greenhouse system comprises at least two glass panes that are arranged in parallel and joined to each other, thus forming at least one sealed interstice.

9. The greenhouse system according to one or more of Claims 1 to 8,
**characterized in that**
at least part of the glazing of the greenhouse system comprises at least one break-proof layer.

10. The greenhouse system according to one or more of Claims 1 to 9,
**characterized in that**
at least part of the glazing of the greenhouse system comprises at least one polymer film arranged between two glass panes.

11. The greenhouse system according to one or more of Claims 1 to 10,
**characterized in that**
at least part of the glazing of the greenhouse system comprises at least one PVB film arranged between two glass panes.

12. The greenhouse system according to one or more of Claims 1 to 11,
**characterized in that**
at least part of the glazing of the greenhouse system comprises at least one laminated safety glass pane arrangement.

13. The greenhouse system according to one or more of Claims 1 to 12,
**characterized in that**
at least part of the glazing of the greenhouse system comprises at least one measure for reducing light reflection.

14. The greenhouse system according to one or more of Claims 1 to 13,
**characterized in that**
at least part of the glazing of the greenhouse system is configured in such a way that at least one light source is either integrated into the glazing itself or installed on the edge of the glazing, so that it can irradiate the plant culture(s) located underneath it.

15. The greenhouse system according to one or more of Claims I to 14,
**characterized in that**
the greenhouse system comprises at least two different zones with different glazing which, thanks to different functional layers, is adapted to the plant culture located **in that** particular zone.

## Revendications

1. Système de serre comprenant au moins une culture de plante, au moins une partie du vitrage du système de serre comprenant une couche fonctionnelle, **caractérisé en ce que** la couche fonctionnelle est adaptée à cette culture de plante, au moins une partie du vitrage du système de serre comprenant au moins une couche d'argent et une couche d'oxyde de zinc dopée à l'aluminium, l'adaptation de la couche fonctionnelle s'effectuant en outre par le biais d'une variation de l'épaisseur de la couche d'argent ou du nombre de couches d'argent.

2. Système de serre selon la revendication 1, **caractérisé en ce que** la couche fonctionnelle influence la transmission du vitrage dans au moins une plage de longueurs d'ondes déterminée et/ou influence la fraction de lumière transmise diffuse.

3. Système de serre selon l'une des ou les deux revendications 1 ou 2, **caractérisé en ce qu'**au moins une partie du vitrage du système de serre comprend au moins deux couches d'argent.

4. Système de serre selon l'une ou plusieurs des revendications 1 à 3, **caractérisé en ce qu'**au moins une partie du vitrage du système de serre comprend au moins deux couches de métal et/ou d'oxyde de métal d'épaisseur différente.

5. Système de serre selon l'une ou plusieurs des revendications 1 à 4, **caractérisé en ce qu'**au moins une partie du vitrage du système de serre comprend au moins une feuille de polymère translucide.

6. Système de serre selon l'une ou plusieurs des revendications 1 à 5, **caractérisé en ce qu'**au moins une couche fonctionnelle est appliquée sur une vitre de verre du vitrage du système de serre proche de l'extérieur du système de serre.

7. Système de serre selon l'une ou plusieurs des revendications 1 à 6, **caractérisé en ce qu'**au moins une couche fonctionnelle est appliquée sur une vitre de verre du vitrage du système de serre proche de l'espace intérieur du système de serre.

8. Système de serre selon l'une ou plusieurs des revendications 1 à 7, **caractérisé en ce qu'**au moins une partie du vitrage du système de serre comprend au moins deux vitres de verre disposées parallèlement et reliées entre elles, lesquelles forment au moins un espace intermédiaire fermé.

9. Système de serre selon l'une ou plusieurs des revendications 1 à 8, **caractérisé en ce qu'**au moins une partie du vitrage du système de serre comprend au moins une couche incassable.

10. Système de serre selon l'une ou plusieurs des revendications 1 à 9, **caractérisé en ce qu'**au moins une partie du vitrage du système de serre comprend au moins une feuille de polymère située entre deux vitres de verre.

11. Système de serre selon l'une ou plusieurs des revendications 1 à 10, **caractérisé en ce qu'**au moins une partie du vitrage du système de serre comprend au moins une feuille de PVB située entre deux vitres de verre.

12. Système de serre selon l'une ou plusieurs des revendications 1 à 11, **caractérisé en ce qu'**au moins une partie du vitrage du système de serre comprend au moins un ensemble de vitres de verre composite de sécurité.

13. Système de serre selon l'une ou plusieurs des revendications 1 à 12, **caractérisé en ce qu'**au moins une partie du vitrage du système de serre comprend une mesure pour réduire la réflexion de la lumière.

14. Système de serre selon l'une ou plusieurs des revendications 1 à 13, **caractérisé en ce qu'**au moins une partie du vitrage du système de serre est réalisée de manière telle qu'au moins une source de lumière est intégrée dans le vitrage lui-même ou est montée au bord du vitrage de sorte qu'elle peut illuminer la ou les culture(s) de plante(s) située(s) en dessous.

15. Système de serre selon l'une ou plusieurs des revendications 1 à 14, **caractérisé en ce que** le système serre comprend au moins deux zones différentes avec des vitrages différents qui, grâce à différentes couches fonctionnelles, sont adaptés à la culture de plante qui se trouve dans la zone respective.
